# EUROPÄISCHE PATENTSCHRIFT

(11) **EP 0 235 776 B1**
(45) Veröffentlichungstag und Bekanntmachung des Hinweises auf die Patenterteilung: **31.03.1993**
(21) Anmeldenummer: 87102896.5
(22) Anmeldetag: 21.09.1984
(51) Int. Cl.: H04M 1/18

(54) **Telefon, insbesondere Autotelefon**
Telephone, especially car telephone
Téléphone, plus spécialement téléphone de voiture

(30) Priorität: 11.10.1983 CH 5528/83; 15.12.1983 CH 6678/83; 27.08.1984 CH 4080/84
(43) Veröffentlichungstag der Anmeldung: 09.09.1987
(62) Teilanmeldung aus: 84111270.9
(73) Patentinhaber: Peiker, Andreas, 61365 Friedrichsdorf/Ts. (DE)
(72) Erfinder: Peiker, Andreas, D-6380 Bad Homburg v.d. Höhe (DE); Kehry, Manfred, D-7240 Horb 1 (DE)
(74) Vertreter: Keller, René, Dr.

(56) Entgegenhaltungen:
- FR-A- 1 262 722
- FR-A- 2 415 394
- US-A- 4 153 822
- MOTOROLA Technical Developments, vol. 3, no. 1, March 1983, pages 8,9, Motorola Inc., Schaumburg, Illinois (US); D.E. Irving : "Handset latch & delatch system"

## Beschreibung

Die Erfindung betrifft ein Telefon gemäss dem Oberbegriff des Patentanspruchs 1, insbesondere ein Autotelefon, wobei das Telefon zum Gegensprechen oder zum Wechselsprechen ausgebildet sein kann.

Ein Telefon dieser Art ist aus der US-A 4,153,822 bekannt. Bei ihm ist der Sprechhörer durch zwei Rastfedern an der Halterung gehalten, deren Rastwiderstand sowohl beim Auflegen als auch beim Abheben durch Druck bzw. Zug auf den Sprechhörer überwindbar ist. Die beiden Rastfedern sind an zwei die einander zugewandten Seiten der Sprech- und der Hörmuschel abstützenden Erhebungen angeordnet und greifen je in eine Vertiefung der Sprech- bzw. Hörmuschel. Weil der Sprechhörer nur durch die Rastfederkraft an der Halterung gehalten ist, besteht die Gefahr, dass er bei einem Unfall aus der Halterung herausspringt und die Autoinsassen verletzt.

Ein Telefon anderer Art ist aus MOTOROLA technical developments, Band 3, Nr. 1, März 1983, S. 8/9, Schaumburg, Illinois (US), D. Irving: "Handset latch & delatch system" bekannt. Bei ihm ist eine kastenförmige Halterung für die Hörmuschel des Sprechhörers (Handapparats) vorgesehen. Die in die kastenförmige Halterung eingesetzte Hörmuschel ist an ihrer Vorder- und Rückseite gegen Zug gesichert gehalten. An der Vorderseite durch einen am oberen Rand der Halterungswandung gebildeten, nach innen über den Kastenhohlraum ragenden Vorsprung, an der Rückseite durch eine nach Art einer Schlossfalle ausgebildete, durch eine Feder belastete Sperrklinke, die mittels einer Ausrückvorrichtung lösbar ist. Die Hörmuschel hat für diese Halterung an ihrer Vorder- und Rückseite je einen Vorsprung. Der vordere, schräg nach oben gerichtete Vorsprung greift unter den Vorsprung der Halterungswandung, der hintere Vorsprung unter die Sperrklinke.

Zum Einführen der Hörmuschel in die Halterung muss der Sprechhörer geneigt werden, so dass die Hörmuschel unten und die Sprechmuschel oben liegt. Die Hörmuschel wird dann in die Halterung so eingefügt, dass ihr vorderer Vorsprung unter den Vorsprung der Halterungswandung zu liegen kommt. Anschliessend wird der hintere Teil des Sprechhörers nach unten gedrückt, bis die Sperrklinke am hinteren Vorsprung der Hörmuschel einschnappt. Zum Lösen des Sprechhörers wird die Ausrückvorrichtung gedrückt und der Hörer zunächst mit dem hinteren Ende (Sprechmuschel) nach oben geschwenkt, so dass sich der vordere Vorsprung der Hörmuschel vom Vorsprung der Halterungswandung löst, woraufhin der Hörer in der geneigten Lage aus der Halterung herausgezogen werden kann.

Das Einführen der Hörmuschel in die Halterung erfordert einige Aufmerksamkeit, weil der Sprechhörer dazu in eine bestimmte, geneigte Lage gebracht und mit der Muschel unter Beibehaltung dieser Lage schräg in die kastenförmige Halterung eingeführt werden muss. Dadurch wird die Aufmerksamkeit des Autofahrers vom Verkehr abgelenkt, und es besteht zudem die Gefahr, dass der Fahrer in Verkehrssituationen, die besondere Aufmerksamkeit erfordern, den Sprechhörer einfach neben die Halterung ablegt. Dann ist der Hörer nicht mehr gesichert und kann bei einem Unfall die Autoinsassen verletzen. Weil nur das eine Ende des Sprechhörers, nämlich nur die Hörmuschel an der Halterung gesichert ist, können ferner bei einem Unfall die auf den übrigen Teil des Sprechhörers wirkenden Kräfte ein erhebliches Drehmoment ausüben, so dass auf den Vorsprung der Halterungswandung und die Sperrklinke sowie die Vorsprünge der Hörmuschel sehr hohe Kräfte wirken, wobei die Vorsprünge abbrechen können und der Sprechhörer dann nicht mehr gehalten ist.

Ein ähnliches Telefon, bei dem der Sprechhörer ebenfalls an der Halterung gegen Zug gesichert ist, ist aus der FR-A 1 262 722 bekannt. Die Halterung hat zwei L-förmige, schwenkbar gelagerte Gabeln für die Aufnahme der Hör- und Sprechmuschel. Die obere Gabel ist durch eine Feder belastet, die untere Gabel ist mittels einer Verriegelungsvorrichtung sicherbar. Zum Auflegen (Aufhängen) des Sprechhörers (Handapparats) muss zuerst die Hörmuschel in die obere Gabel eingehängt und dann der Sprechhörer nach hinten gedrückt werden, wobei die untere Gabel nach hinten schwenkt, der Sprechhörer etwas nach unten geht und schliesslich die Verriegelungsvorrichtung einrückt. Zum Abheben des Sprechhörers wird die Verrriegelungsvorrichtung mittels einer Taste ausgerückt.

Auch bei dieser Sicherungshalterung kann der Sprechhörer nur in einer bestimmten Weise aufgelegt werden, nämlich nur, indem zuerst die Hörmuschel in die obere Gabel eingehängt wird. Und es ist nur die eine Muschel (hier die Sprechmuschel) an der Halterung gesichert. Die andere Muschel (hier die Hörmuschel) ist nur federnd gegen Zug gehalten, nicht aber gegen Zug gesichert verriegelt.

Aus der FR-A 2 415 394 ist im weiteren ein Telefon bekannt, bei welchem der Sprechhörer durch einen federnden Rastmechanismus an der Halterung gehalten ist, dessen Federkraft durch Zug am Handapparat überwunden werden kann, so dass er gleich wie bei der US-A 4,153,822 bei einem Unfall aus der Halterung herausspringen kann und Verletzungsgefahr besteht.

Der Erfindung liegt die Aufgabe zugrunde, den aufgelegten Sprechhörer so an der Halterung zu verankern, dass er sich bei einem Unfall unter keinen Umständen von der Halterung lösen und die Autoinsassen verletzen kann, dass er aber trotzdem mühelos aufgelegt und abgehoben werden kann.

Die erfindungsgemässe Lösung dieser Aufgabe ist Gegenstand des Patentanspruchs 1. Im Patentanspruch 2 ist eine bevorzugte Ausführungsart umschrieben.

Da der Sprechhörer beidseitig seines Schwerpunkts sowohl mit seinem die Sprechmuschel als auch mit seinem die Hörmuschel aufweisenden Teil an der Halterung gegen Zug gesichert gehalten ist, können bei einem Unfall die auf den Sprechhörer wirkenden Kräfte nicht durch Hebelwirkung so verstärkt werden, dass die betreffenden Sperrmittel den Sprechhörer nicht mehr zu halten vermögen. Sowohl die die Sprechmuschel als auch die die Hörmuschel sichernde(n) Sperrklinke(n) rücken beim Auflegen des Sprechhörers unabhängig von dessen Lage leicht und zuverlässig ein, d. h. unabhängig davon, ob zuerst die Hör- oder die Sprechmuschel auf die Halterung auftrifft. Dadurch wird die Gefahr vermieden, dass die Aufmerksamkeit des Fahrers beim Auflegen des Sprechhörers vom Verkehr abgelenkt wird und der Fahrer in Verkehrssituationen, die besondere Aufmerksamkeit erfordern, den Sprechhörer einfach neben die Halterung ablegt.

Ausführungsbeispiele der Erfindung werden nachfolgend anhand der Figuren 1 bis 7 erläutert. In den Figuren 8 bis 11 sind Autotelefone dargestellt, die nicht den Gegenstand der Erfindung bilden. Es zeigen:
- Fig. 1: eine teilweise geschnittene Seitenansicht eines Autotelefons,
- Fig. 2: eine teilweise geschnittene Draufsicht auf die Halterung des Autotelefons,
- Fig. 3: eine teilweise geschnittene (Linie III-III in Fig. 4) Seitenansicht eines Teils einer Variante des Autotelefons,
- Fig. 4: eine teilweise geschnittene Draufsicht auf den die Sperre für die Hörmuschel und die Ausrückvorrichtung enthaltenden Teil der Halterung des Autotelefons von Fig. 3,
- Fig. 5: eine Ansicht der Sperre und Ausrückvorrichtung in Blickrichtung V in Fig. 4, ohne die Halterung,
- Fig. 6: eine Unteransicht des in Fig. 3 dargestellten Teils des Sprechhörers, in kleinerem Massstab,
- Fig. 7: eine teilweise geschnittene Seitenansicht des in Fig. 3 dargestellten Teils des Sprechhörers, im Massstab von Fig. 6,
- Fig. 8: eine teilweise geschnittene Seitenansicht einer weiteren Variante des Autotelefons,
- Fig. 9: eine teilweise geschnittene Draufsicht auf die Halterung des Autotelefons von Fig. 8,
- Fig. 10: eine teilweise geschnittene Seitenansicht einer Variante des Autotelefons von Fig. 8 und 9, und
- Fig. 11: eine teilweise geschnittene Draufsicht auf die Halterung des Autotelefons von Fig. 10.

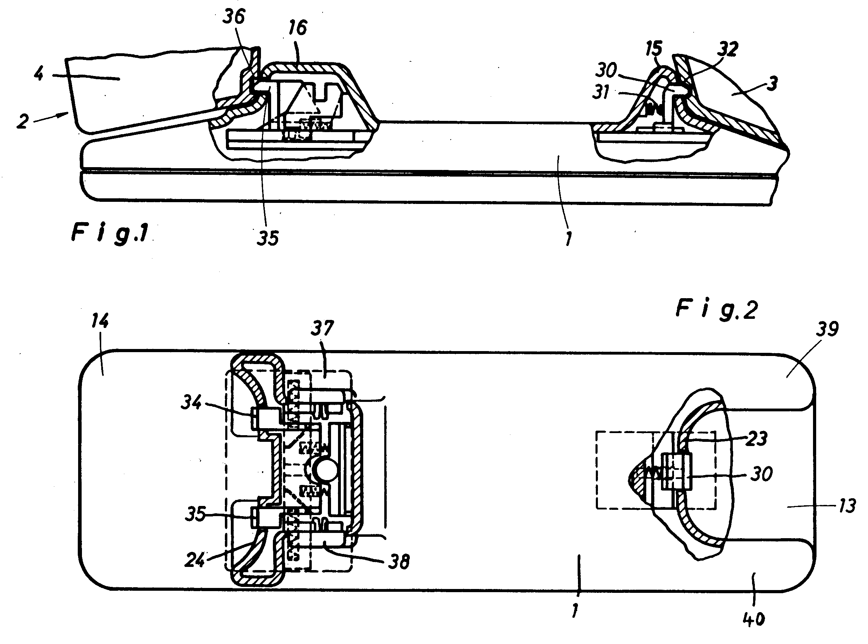

Das in Fig. 1 und 2 dargestellte Autotelefon hat eine im Fahrzeug zu befestigende, als Auflagevorrichtung ausgebildete Halterung 1 für den Sprechhörer (Handapparat) 2. Die Sprechmuschel 3 (d.i. der die Sprechkapsel aufnehmende Gehäuseteil des Sprechhörers) und die Hörmuschel 4 stehen in der üblichen Weise quer zum Griff des Sprechhörers vor. Die Halterung 1 hat eine Lagermulde 13 und eine Auflagefläche 14 für die Sprech- und die Hörmuschel 3 und 4. Die Lagermulde 13 und die Auflagefläche 14 sind an den einander zugewandten Enden durch je eine Erhebung 15 und 16 begrenzt. Die einander abgewandten Wände der Erhebungen 15, 16 sind mit 23, 24 bezeichnet. Die Wand 24 der Erhebung 16 ist dem unteren Randbereich der Hörmuschel 4 angepasst und entsprechend diesem zur Vertikalen geneigt, so dass die Hörmuschel 4 beim Auflegen in Fig. 1 nach links (von der Lagermulde 13 für die Sprechmuschel 3 hinweg) und beim Abheben nach rechts rutscht.

Durch die Wand 23 der Erhebung 15 ragt eine eine Sperre für die Sprechmuschel 3 bildende Klinke 30, die in eine Vertiefung 32 der Sprechmuschel 3 hineingreift. Der eine Schenkel der Klinke 30 ist im Hohlraum der Erhebung 15 angeordnet und durch eine Feder 31 belastet, der andere durch die Wand 23 der Erhebung 15 hindurchragende Schenkel ist nach Art einer Schlossfalle am freien Ende abgeschrägt.

In der hohlen Erhebung 16 sind eine Sperre für die Hörmuschel 4 sowie eine Ausrückvorrichtung angeordnet. Die Sperre hat zwei, nach Art einer Schlossfalle ausgebildete, federbelastete Schnappriegel oder Klinken 34, 35, die durch Oeffnungen der Wand 24 hindurch in Aussparungen 36 der Hörmuschel 4 greifen. Die Ausrückvorrichtung hat an beiden Seiten der Erhebung 16 je eine Drucktaste 37, 38.

Beide Tasten 37, 38 wirken auf einen am Fuss eines die Sperrklinken 34, 35 aufweisenden Trägers angreifenden Schieber. Die Sperrklinken 34, 35 können damit sowohl durch Druck auf die eine Taste 37 als auch durch Druck auf die andere Taste 38 ausgerückt werden.

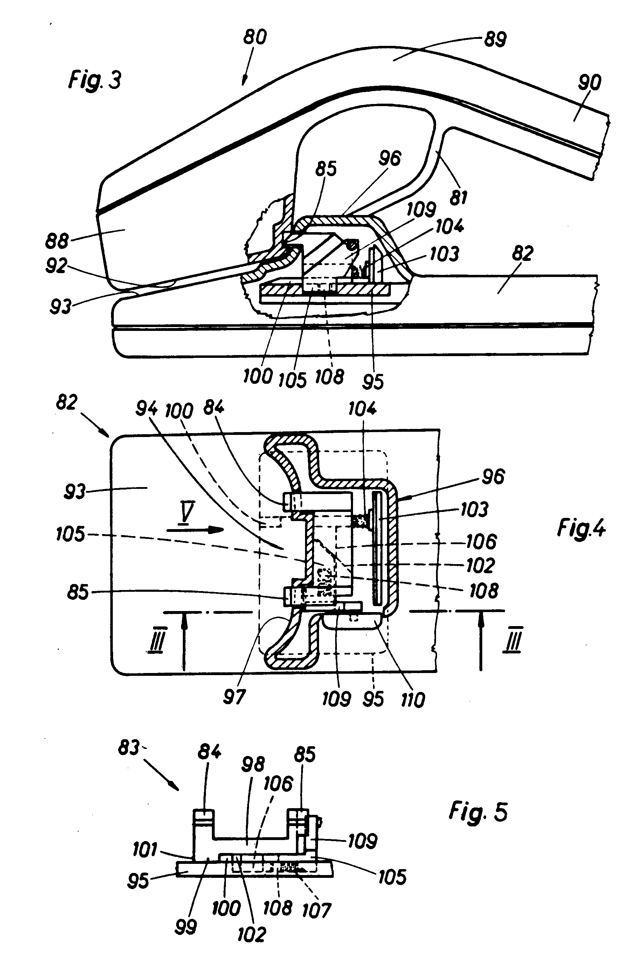

Die Ausrückvorrichtung entspricht im übrigen der weiter hinten im einzelnen erläuterten, jedoch nur eine Drucktaste aufweisenden Ausrückvorrichtung der Ausführungsform von Fig. 3-5.

Der Sprechhörer 2 kann in horizontaler und in nach vorne oder nach hinten geneigter Lage aufgelegt werden. Wenn er mit der Sprechmuschel 3 voran aufgelegt wird, wird zuerst die Klinke 30 gegen die Kraft der Feder 31 zurückgedrängt und klinkt dann in die Vertiefung 32 ein. Anschliessend werden die Klinken 34, 35 durch den unteren Rand der Hörmuschel 4 zurückgedrängt und klinken in die Aussparungen 36 ein. Das Umgekehrte gilt, wenn der Sprechhörer 2 mit der Hörmuschel 4 voran aufgelegt wird.

Zum Abheben wird der Spechhörer 2 am (nicht dargestellten) Griff mit der rechten oder linken Hand ergriffen und gleichzeitig mit deren Daumen auf die Taste 38 oder 37 gedrückt, wodurch die Klinken 34, 35 aus den Aussparungen 36 ausrücken. Für das einhändige Abnehmen des Sprechhörers ist es wesentlich, dass die Taste 37 oder 38 bequem mit einem Finger der den Griff umgreifenden Hand gedrückt werden kann, was durch die Anordnung der Tasten 37, 38 an den beiden Seiten der in den Eckbereich zwischen dem Griff und der Hörmuschel 4 hineinragenden Erhebung 16 gewährleistet ist.

Die Vertiefung 32 und der in sie eingreifende Teil der Klinke 30 sind so ausgebildet, dass die Sprechmuschel 3 nicht gehoben werden kann, jedoch nach Ausrücken der Klinken 34, 35 und leichtem Abheben der Hörmuschel 4 durch eine kleine horizontale Bewegungskomponente aus der Klinke 30 herausrutscht. Die horizontale Bewegungskomponente ergibt sich dabei zwangsläufig dadurch, dass die Hörmuschel 4 beim Ausrücken der Klinken 34, 35 über die schräge Vorderwand 24 der Erhebung 16 nach hinten gleitet.

Ein seitliches Wegrutschen des Sprechhörers 3 wird nicht nur durch die Klinken 30 und 34, 35, sondern vor allem auch durch die die Sprechmuschel 3 seitlich abstützenden Seitenwände 39, 40 der Lagermulde 13 und die die Hörmuschel 4 seitlich haltende, in der Draufsicht bogenförmige Wand 24 verhindert.

Wenn bei einem Unfall eine starke Zugkraft auf den Sprechhörer 2 wirkt - man rechnet mit Beschleunigungen bis zu 30 g - bleibt dieser an der Halterung 1 gesichert und zwar selbst dann, wenn er sich infolge seiner Eigenelastizität etwas verbiegt. Denn die Zugkräfte greifen am Schwerpunkt des Sprechhörers, also am Griff zwischen der Sprech- und Hörmuschel 3, 4 an und bewirken deshalb nicht ein Aufbiegen, sondern im Gegenteil ein Zusammenbiegen des Sprechhörers 2, d.h. eine Annäherung von Sprech- und Hörmuschel 3, 4 und damit sogar noch eine festere Halterung an den Klinken 30, 34 und 35 und den Erhebungen 15, 16.

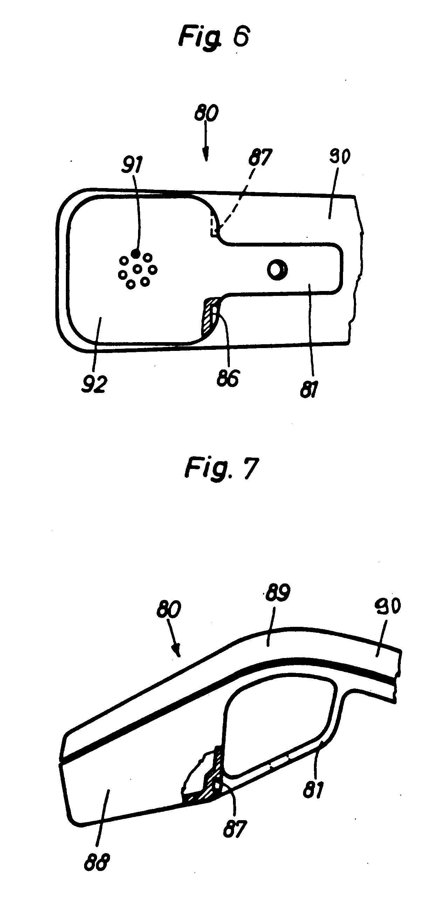

Bei der in Fig. 3-7 dargestellten Ausführungsform ist der Sprechhörer 80 in Längsrichtung stumpfwinklig abgebogen und mit einem Bügel 81 ausgerüstet. Die Abbiegung 89 ist im an die Hörmuschel 88 angrenzenden Teil des Griffs 90 gebildet. Der Bügel 81 ist schmaler als die Hörmuschel 88 ausgeführt und erstreckt sich vom Rand der die Schallöffnungen 91 aufweisenden Wand 92 der Hörmuschel über den Eckbereich zwischen der Hörmuschel und dem Griff und über die Abbiegung 89 hinweg an die Innenseite des an die Abbiegung anschliessenden, geradlinig zur Sprechmuschel verlaufenden Teils des Griffs 90. Die Aussparungen 86, 87 sind an dem der Sprechmuschel zugewandten, unteren Randbereich der Hörmuschel 88 beidseits des Bügels 81 angeordnet.

Die Halterung 82 ist gleich wie die Halterung 1 mit einer Lagermulde für die Sprechmuschel, einer in eine Vertiefung oder Aussparung der Sprechmuschel greifenden Klinke und einer ebenen oder leicht konvex gewölbten Auflagefläche 93 für die Hörmuschel 88 ausgebildet. Sie ist über ihre ganze Länge gleich breit und der Sprechhörer 80 verjüngt sich von der Hör- zur Sprechmuschel, so dass die gleich breit wie die Halterung 82 ausgeführte Hörmuschel 88 bündig an die Ränder der Halterung anschliesst und die schmalere Sprechmuschel in die Lagermulde passt. Die Wand 97 hat zwei Oeffnungen für die beiden nach Art einer Schlossfalle oben abgeschrägten Sperrklinken oder Schnappriegel 84, 85, die an den Schenkeln eines U-förmigen Trägers 98 angeformt sind. Die obere Wand der Erhebung 96 weist eine zwischen die Schenkel des U-Trägers 98 hineinragende Einbuchtung 94 auf, welche den Bügel 81 des aufgelegten Sprechhörers 80 aufnimmt. Der U-Träger 98 hat einen auf der Platte 95 gleitenden, trapezförmigen Fuss 99 mit einer Nut, die auf einer in Längsrichtung der Halterung 82 auf der Platte 95 angeordneten Führungsschiene 100 geführt ist. Der eine Schenkel 101 des trapezförmigen Fusses 99 ist bündig mit der in Fig. 4 oberen (in Fig. 5 linken) Seitenfläche des Trägers 98, der andere Schenkel 102 grenzt an das vordere, (in Fig. 4 linke) Ende der Nut an und verläuft unter einem Winkel von 45° schräg nach hinten von der Nut weg. Eine an einer Stützwand 103 abgestütze Druckfeder 104 drückt den Träger 98 in Fig. 4 nach links, wodurch der schräge Schenkel 102 an eine entsprechend schräge Randfläche eines Schiebers 105 der Ausrückvorrichtung gedrückt wird. Der Schieber 105 ist in einer rechteckigen Vertiefung 106 der Platte 95 senkrecht zur Schiene 100 verschiebbar gelagert und zwar gegen die Kraft einer Druckfeder 107, die in einer Aussparung an der Unterseite des Schiebers angeordnet und deren eines Ende am in Fig. 4 unteren Rand der Aussparung und deren anderes Ende an einem vom Boden der Vertiefung 106 vorstehenden Bolzen 108 abgestützt ist, der einen Anschlag für den in Fig. 4 oberen Rand der Aussparung bildet und den Schieber 105 gegen die Kraft der Feder 107 in der in der Zeichnung dargestellten Ruhelage hält. Die Dicke des Schiebers 105 ist so bemessen, dass dieser aus der Vertiefung 106 herausragt und die an den Fuss 99 angrenzende (in Fig. 5 rechte), untere Fläche des Trägers 98 gleitend auf ihm abgestützt ist. Am in Fig. 4 unteren Ende des Schiebers 105 ist ein schräg nach oben ragendes, plattenförmiges Organ 109 angeformt, das eine Drucktaste 110 trägt, welche durch eine Aussparung in der Seitenwand der Erhebung 96 drückbar ist. Die Drucktaste 110 wird zweckmässig als Leuchttaste ausgeführt.

Beim Auflegen des Sprechhörers 80 werden die Schnappriegel 84, 85 vom Rand der Hörmuschelwand 92 zurückgedrängt, worauf sie unter der Wirkung der Feder 104 in die Aussparungen 86, 87 einschnappen. Zum Abheben des Sprechhörers wird die Taste 110 mit dem Daumen der ihn ergreifenden Hand gedrückt, wodurch der Schieber 105 gegen die Kraft der Feder 107 vorgeschoben wird, der schräge Schenkel 102 des Trägerfusses 99 an der schrägen Randfläche des Schiebers 105 gegen die Kraft der Feder 104 zurückgleitet und die Schnappriegel 84, 85 aus den Aussparungen 86, 87 ausrücken. Beim Abheben des Sprechhörers wird der Daumen an den vom Bügel 81 umschlossenen Griffteil gelegt, was infolge des durch die Abbiegung 89 geschaffenen, grossen Zwischenraums zwischen dem Bügel und dem Griff nicht nur mühelos, sondern auch zwangsläufig geschieht, weil der Bügel eine Bewegung des Daumens aus dem von ihm umschlossenen Griffbereich heraus behindert. Der Bügel 81 sichert dann den Sprechhörer 80 gegen ein aus der Hand gleiten. Wegen des durch die Abbiegung 89 geschaffenen, grossen Zwischenraums zwischen Bügel 81 und Griff 90, kann der Daumen beim Auflegen des Sprechhörers im Bügel belassen werden. Das Ausrücken der Sprechmuschel 3 aus der Klinke 30 erfolgt in der im Zusammenhang mit Fig. 1 und 2 beschriebenen Weise.

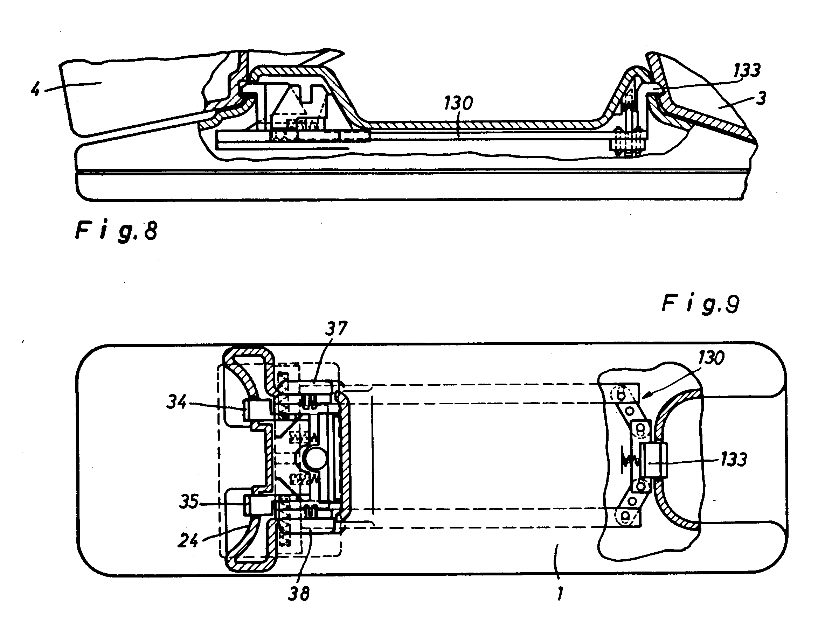

Die beiden in Fig. 8 bis 11 dargestellten Varianten des Autotelefons unterscheiden sich von den Ausführungsbeispielen der Fig. 1-7 dadurch, dass die Ausrückvorrichtung auf beide Sperren, also auch auf die die Sprechmuschel 3 sichernde Klinke wirkt.

Bei der Variante von Fig. 8 und 9 ist die die Sprechmuschel 3 sichernde Klinke 133 durch einen Hebelmechanismus 130 mit dem die Sperrklinken oder Schnappriegel 34, 35 aufweisenden Träger verbunden, so dass beim Drücken einer der Tasten 37, 38 sowohl die Klinken 34, 35 als auch die Klinke 133 ausrücken.

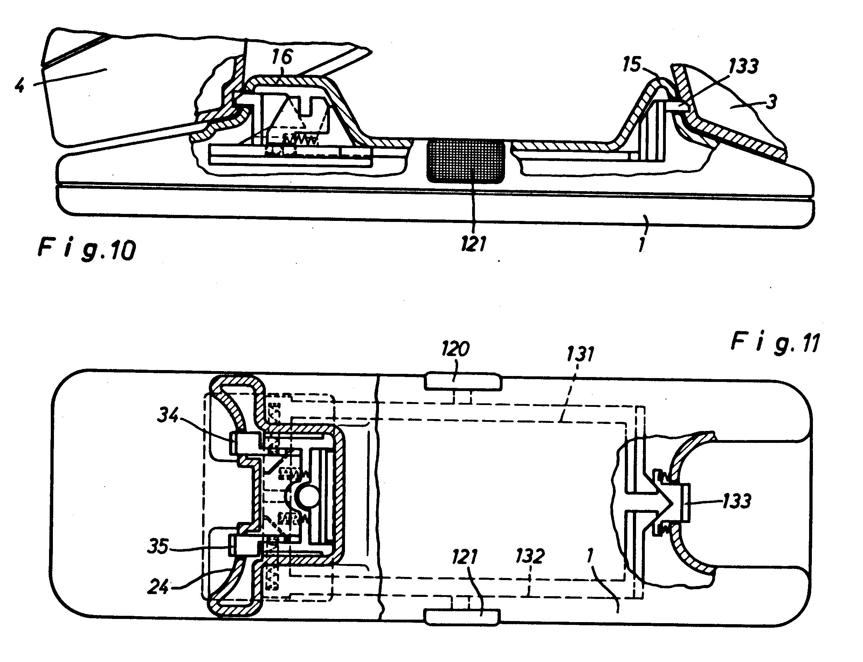

Bei der Variante von Fig. 10 und 11 sind die Drucktasten 120, 121 etwa in der Mitte zwischen den Erhebungen 15 und 16 in seitlichen Aussparungen der Halterung 1 angeordnet und durch je eine in Längsrichtung verlaufende Stange 131, 132 sowohl mit den zum Ausrücken der Klinken 34, 35 dienenden Schiebern (entsprechend dem Schieber 105) als auch mit entsprechenden, in der Zeichnung nicht näher dargestellten Gliedern zum Ausrücken der Klinke 133 verbunden.

Die Halterung kann in jeder gewünschten Lage im Fahrzeug befestigt und statt horizontal, z.B. auch vertikal angeordnet werden.

Die Klinke 30, auf welche die Ausrückvorrichtung nicht wirkt, könnte statt an der Halterung auch am Sprechhörer, insbesondere der Sprechmuschel angeordnet sein. Grundsätzlich könnte man auch die Sperre, auf welche die Ausrückvorrichtung wirkt, zusammen mit dieser am Sprechhörer anordnen, wobei die Taste bzw. Tasten der Ausrückvorrichtung z.B. an der Unterseite des Griffs des Sprechhörers angeordnet sein könnten. Gegenüber der Anordnung der Ausrückvorrichtung und der von ihr beaufschlagten Sperre an der Halterung hat dies jedoch den Nachteil, dass der Sprechhörer schwerer und seine Handlichkeit beeinträchtigt wird.

Der Gabel- oder Hakenumschalter eines Autotelefons für Gegensprechen kann am Boden der den Bügel aufnehmenden Vertiefung 94, die Sprechtaste eines Autotelefons für Wechselsprechen kann an der Innenseite des Griffs des Sprechhörers zwischen dem Bügel und der Sprechmuschel angeordnet sein.

## Patentansprüche

1. Telefon, insbesondere Autotelefon, mit einer in einem Fahrzeug zu befestigenden Halterung (1; 82) für den Sprechhörer (2; 80), wobei die einander zugewandten Seiten der Sprech- und Hörmuschel (3, 4; 88) an zwei Erhebungen (15, 16; 96) der Halterung (1; 82) abgestützt und durch zwei federbelastete Haltemittel (30, 34, 35, 84, 85) gehalten sind, die unabhängig von der Lage des Sprechhörers (2; 80) beim Auflegen durch Druck auf diesen überwindbar sind, dadurch gekennzeichnet, dass jedes der beiden Haltemittel durch mindestens eine nach Art einer Schlossfalle ausgebildete, nur durch Druck, nicht aber durch Zug überwindbare Sperrklinke (30, 34, 35, 84, 85) gebildet ist, so dass sowohl die Sprechmuschel (3) als auch die Hörmuschel (4; 88) an der jeweiligen Erhebung (15, 16; 96) gegen Zug gesichert gehalten ist, und dass die eine Sperrklinke oder -klinken (34, 35; 84, 85), welche die eine der beiden Muscheln (4) sichert oder sichern, mittels einer Ausrückvorrichtung (37, 38; 110) ausrückbar ist, und die andere Sperrklinke oder -klinken (30), welche die andere Muschel (3) sichert bzw. sichern, nur durch eine erst nach Ausrücken der einen Sperrklinke oder -klinken (34, 35; 84, 85) mögliche Bewegung des Sprechhörers (2; 80) lösbar ist, wobei die Erhebung (16; 96), an der sich die eine, mittels der ausrückbaren Sperrklinke oder -klinken (34, 35; 84, 85) gesicherte Muschel (4; 88) abstützt, so ausgebildet ist, dass der Sprechhörer (2) beim Abheben eine zum Lösen der die andere Muschel (3) sichernden, anderen Sperrklinke oder -klinken (30) ausreichende Bewegungskomponente in seiner Längsrichtung erhält, wenn die eine Muschel (4; 88) nach Ausrücken der Sperrklinke bzw. -klinken (34, 35; 84, 85) über die Wand (24) der Erhebung (16) in Richtung auf die andere Muschel (3) gleitet.

2. Telefon nach Anspruch 1, dadurch gekennzeichnet, dass die Ausrückvorrichtung in einer die Hörmuschel (4; 88) abstützenden Erhebung (16; 96) angeordnet und mittels wenigstens einer Taste (37, 38; 110; 120, 121) betätigbar ist, die seitlich an dieser Erhebung (16; 96) angeordnet ist, so dass sie mit einem Finger der den Griff (90) des Sprechhörers (2; 80) umgreifenden Hand bestätigbar ist.

## Claims

1. Telephone to be mounted in a vehicle, in particular a car telephone, with a support (1; 82), for the receiver (2; 80), wherein the sides facing one another of the mouthpiece and earpiece (3, 4; 88) are supported on two raised parts (15, 16; 96) of the support (1; 82) and are retained by two spring-loaded retention means (30, 34, 35, 84, 85) which irrespective of the position of the receiver (2; 80) can be released by pressure on these retention means when the car telephone is hung up, characterised in that each of the two retention means takes the form of at least one catch (30, 34, 35, 84, 85) in the form of a latch which can be released only by pressure and not by pulling, such that both the mouthpiece (3) and the earpiece (4; 88) are protected against pulling on the respective raised part (15, 16; 96); and in that a catch or catches (34, 35; 84,85) retaining either of the two pieces (4) can be disengaged by means of a releasing device (37, 38: 110), and the other catch or catches (30) retaining the other piece (3) can only be released by movement of the receiver (2; 80) which is possible only after the catch or one of the catches (34, 35; 84, 85) have been disengaged, wherein the raised part (16; 96) on which one of the secured pieces (4; 88) is supported by means of the disengageable catch or catches (34, 35; 84, 85), has a form such that when the receiver (2) is lifted, it receives a movement component in its longitudinal direction which is sufficient to release the other catch or catches (30) securing the other piece (3), if one piece (4; 88) slides over the wall of the raised part (16), in the direction of the other piece (3) after releasing of the catch or catches (34, 35; 84, 85).

2. Telephone according to claim 1 characterised in the releasing device is disposed in a raised part (16; 96) supporting the earpiece (4; 88), and can be activated by at least one key (37, 38; 110; 120, 121) disposed at the side of this raised part (16; 96), such that it can be activated by means of a finger of the hand gripping the handle (90) of the receiver (2; 80).

## Revendications

1. Téléphone, en particulier téléphone de voiture, comprenant un support (1; 82) destiné à être fixé dans un véhicule, ce support étant destiné au combiné (2; 80), les côtés tournés l'un vers l'autre de la coque à microphone et de la coque à écouteur (3, 4; 88) s'appuyant sur deux saillies (15, 16; 96) du support (1; 82) et étant maintenus par deux moyens de retenue chargés par des ressorts (30, 34, 35, 84, 85), qui, indépendamment de la position du combiné (2; 80) lorsqu'il est raccroché peuvent être surmontés par une pression exercée sur eux, caractérisé en ce que chacun des deux moyens de retenue est constitué par au moins un cliquet de blocage (30, 34, 35, 84, 85) constitué à la manière d'un pêne de serrure pouvant être dégagé uniquement par une pression et non par une traction, ce qui fait qu'aussi bien la coque à microphone (3) que la coque à écouteur (4; 88) sont maintenues d'une manière fiable et pouvant résister à une traction sur la saillie correspondante (15, 16; 96), et en ce que le ou les cliquets de blocage (34, 35; 84, 85) qui maintiennent l'une des deux coques (4) peuvent être dégagés par un dispositif de désenclenchement (37, 38; 110), et le ou les autres cliquets de blocage (30) qui retiennent l'autre coque (3) ne peuvent être dégagés que par un mouvement du combiné (2; 80) possible seulement après le dégagement du ou des cliquets de blocage (34, 35; 84, 85), la saillie (16; 96) sur laquelle s'appuie la coque (4; 88) retenue au moyen du ou des cliquets de blocage dégageables (34, 35; 84, 85) étant constituée de manière que le combiné (2) reçoive, quand il est soulevé, une composante de mouvement suffisante dans sa direction longitudinale pour dégager l'autre ou les autres cliquets (30) qui retiennent l'autre coque (3), lorsque la coque (4; 88) glisse en direction de l'autre coque (3) sur la paroi (24) de la saillie (16) après dégagement du ou des cliquets de blocage (34, 35; 84, 85).

2. Téléphone selon la revendication 1, caractérisé en ce que le dispositif de désenclenchement est disposé dans une saillie (16; 96) supportant la coque à écouteur (4; 88) et peut être actionné au moyen d'au moins un bouton (37, 38; 110; 120, 121) disposé latéralement sur cette saillie (16; 96), de manière qu'il puisse être actionné au moyen d'un doigt de la main entourant la poignée (90) du combiné (2; 80).
